# EUROPEAN PATENT APPLICATION

(11) **EP 4 486 000 A1**
(43) Date of publication of application: **01.01.2025**
(21) Application number: 22928613.3
(22) Date of filing: 24.02.2022
(51) Int. Cl.: H04W 28/16, H04W 24/02

(54) **COMMUNICATION DEVICE AND RADIO COMMUNICATION METHOD**

(71) Applicant: NTT DOCOMO, INC., Tokyo 100-6150 (JP)
(72) Inventor: OKUYAMA Tatsuki, Tokyo 100-6150 (JP); NONAKA Nobuhide, Tokyo 100-6150 (JP); SUYAMA Satoshi, Tokyo 100-6150 (JP)
(74) Representative: Hoffmann Eitle
(86) International application number: PCT/JP2022/007593
(87) International publication number: WO 2023/162085

(57) **Abstract**

A communication device includes a control unit that uses a learning model learning a correlation between a first parameter, which is used for communication control between each of terminals and a base station, and a second parameter affecting the first parameter, to specify the first parameter based on the second parameter. The control unit performs specific control to form a terminal group by grouping of the terminals based on each specified first parameter.

## Description

### [Technical Field]

The present disclosure relates to a communication device and a radio communication method using a learning model.

### [Background Art]

The 3rd Generation Partnership Project (3GPP) has prepared a specification for the 5th generation mobile communication system (which is also called 5G, New Radio (NR), or Next Generation (NG)), and is also promoting the specification of the next generation called Beyond 5G, 5G Evolution or 6G.

In recent years, learning represented by artificial intelligence (AI) and the like has attracted attention, and techniques have been proposed to estimate the position of the UE (User Equipment) by image recognition, to control handover by learning the UEs heading out of the cell, learning locations in which the UEs have poor line-of-sight, and the like (for example, Patent Literature 1).

### [Citation List]

### [Patent Literature]

[Patent Literature 1] Japanese Unexamined Patent Application Publication No. 2020-530727

### [Summary of Invention]

In light of such a background, the inventors have found, as a result of careful examination, that the UEs can be grouped as appropriate by learning the correlation of various parameters, and that appropriate communication control can be executed on a group basis.

An aspect of the disclosure is a communication device including: a control unit that uses a learning model learning a correlation between a first parameter, which is used for communication control between each of terminals and a base station, and a second parameter affecting the first parameter, to specify the first parameter based on the second parameter, wherein the control unit performs specific control to form a terminal group by grouping of the terminals based on each specified first parameter.

Another aspect of the disclosure is a radio communication method, including: using a learning model learning a correlation between a first parameter, which is used for communication control between each of terminals and a base station, and a second parameter affecting the first parameter, to specify the first parameter based on the second parameter; and performing specific control to form a terminal group by grouping of the terminals based on each specified first parameter.

### [Brief Description of Drawings]

[FIG. 1] FIG. 1 is an overall schematic diagram of a radio communication system 10.
[FIG. 2] FIG. 2 is a diagram illustrating a frequency range used in the radio communication system 10.
[FIG. 3] FIG. 3 is a diagram illustrating a configuration example of a radio frame, a subframe and a slot used in the radio communication system 10.
[FIG. 4] FIG. 4 is a functional block configuration diagram of a UE 200.
[FIG. 5] FIG. 5 is a functional block configuration diagram of a gNB 100.
[FIG. 6] FIG. 6 is a functional block diagram illustrating a communication device 300.
[FIG. 7] FIG. 7 is a diagram illustrating an example of a hardware configuration of the gNB 100, the UE 200, and the communication device 300.
[FIG. 8] FIG. 8 is a diagram illustrating a configuration example of a vehicle 2001.

### [Modes for Carrying out the Invention]

Hereinafter, an embodiment will be described based on the drawings. The same functions and configurations are indicated by the same or similar reference signs, and the description thereof will be omitted as appropriate.

### [Embodiment]

### (1) Overall Schematic Configuration of Radio Communication System

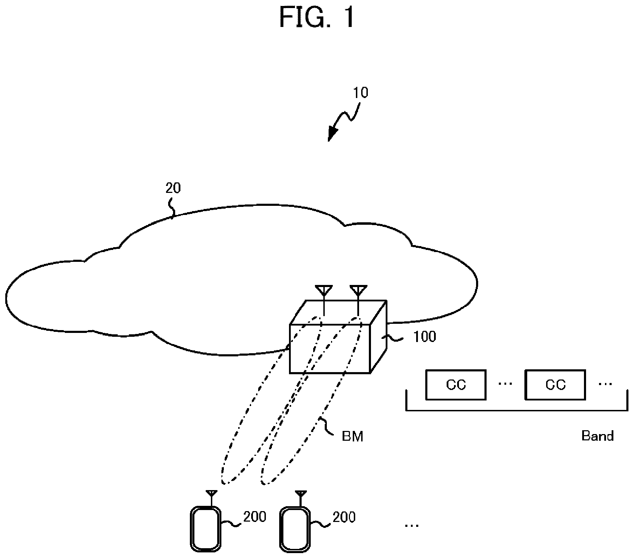

FIG. 1 is an overall schematic configuration diagram of a radio communication system 10 according to the embodiment. The radio communication system 10 is a radio communication system according to 5G New Radio (NR), and includes a Next Generation-Radio Access Network 20 (hereinafter, NG-RAN 20) and a terminal 200 (hereinafter, UE (User Equipment) 200).

Note that, the radio communication system 10 may be a radio communication system according to a scheme called Beyond 5G, 5G Evolution, or 6G.

The NG-RAN 20 includes a base station 100 (hereinafter, gNB 100). Note that, the specific configuration of the radio communication system 10 including the number of gNBs 100 and UEs 200 is not limited to that of the example illustrated in FIG. 1.

The NG-RAN 20 actually includes multiple NG-RAN Nodes, specifically, gNBs (or ng-eNBs), and is connected to a core network (5GC, not illustrated) according to 5G. Note that, the NG-RAN 20 and 5GC may be simply expressed as a "network".

The gNB 100 is a radio base station according to 5G, and performs radio communication with the UE 200 according to 5G. The gNB 100 and the UE 200 can be compatible with Massive MIMO (Multiple-Input Multiple-Output) that generates a beam BM with higher directivity by controlling radio signals transmitted from multiple antenna elements, carrier aggregation (CA) that uses multiple component carriers (CCs) in a bundle, dual connectivity (DC) that communicates with two or more transport blocks at the same time between the UE and each of two NG-RAN Nodes, and the like.

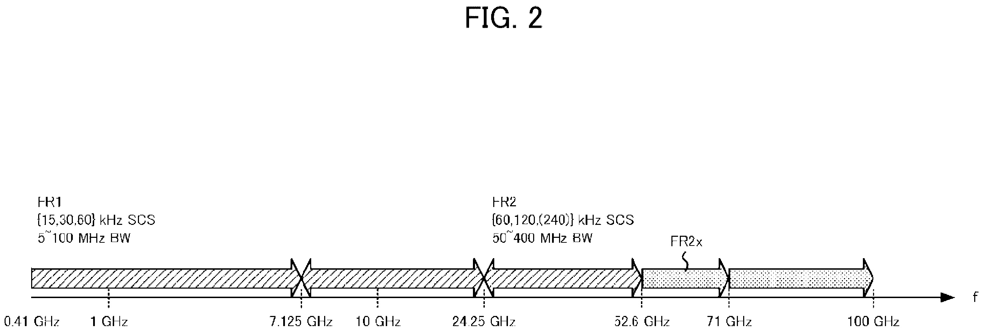

In addition, the radio communication system 10 is compatible with multiple frequency ranges (FRs). FIG. 2 is a diagram illustrating frequency ranges used in the radio communication system 10.

As illustrated in FIG. 2, the radio communication system 10 is compatible with an FR1 and an FR2. Frequency bands of the respective FRs are as follows.

- FR1: 410 MHz to 7.125 GHz
- FR2: 24.25 GHz to 52.6 GHz

In the FR1, a Sub-Carrier Spacing (SCS) of 15, 30, or 60 kHz may be used, and a bandwidth (BW) of 5 to 100 MHz may be used. The FR2 has a higher frequency than the FR1, and the SCS of 60 or 120 kHz (240 kHz may be included) may be used, and the bandwidth (BW) of 50 to 400 MHz may be used.

Note that, the SCS may be interpreted as numerology. The numerology is defined in 3GPP TS38.300 and corresponds to one sub-carrier spacing in a frequency domain.

Further, the radio communication system 10 is also compatible with a higher frequency band than the FR2 frequency band. Specifically, the radio communication system 10 is compatible with a frequency band greater than 52.6 GHz and up to 71 GHz or 114.25 GHz. Such a high frequency band may be referred to as "FR2x" for convenience.

In order to solve the problem that the influence of phase noise becomes larger in the high frequency band, in the case of using a band exceeding 52.6 GHz, Cyclic Prefix-Orthogonal Frequency Division Multiplexing (CP-OFDM)/ Discrete Fourier Transform-Spread (DFT-S-OFDM) having larger Sub-Carrier Spacing (SCS) may be applied.

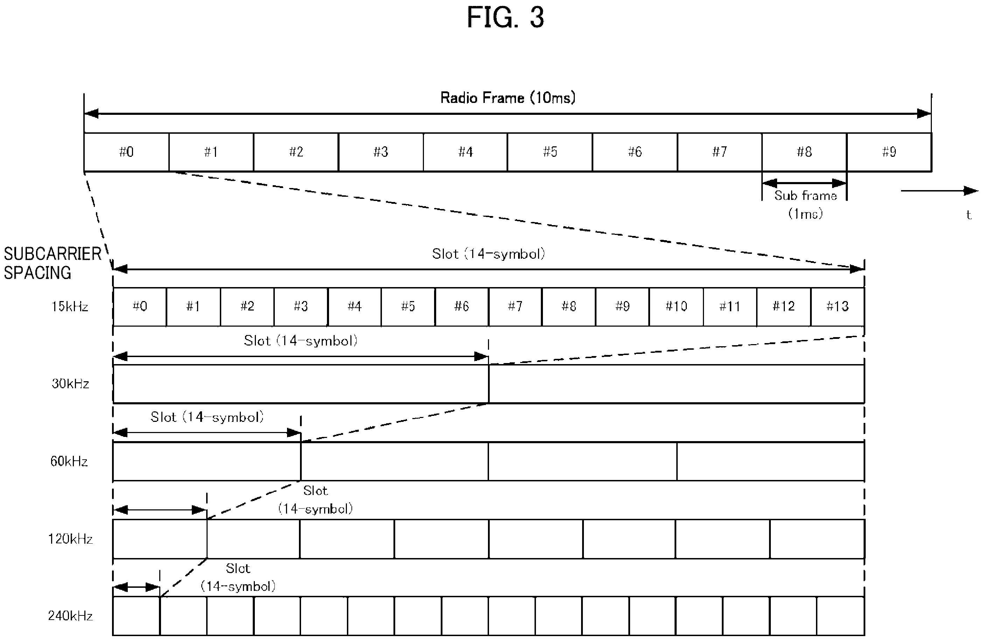

FIG. 3 is a diagram illustrating a configuration example of a radio frame, a subframe, and a slot used in the radio communication system 10.

As illustrated in FIG. 3, one slot includes 14 symbols, and a symbol period (and a slot period) becomes shorter as the SCS becomes larger (wider). The SCS is not limited to the interval (frequency) illustrated in FIG. 3. For example, 480 kHz, 960 kHz, or the like may be used.

In addition, the number of symbols constituting one slot is not necessarily 14 symbols (for example, 28 symbols or 56 symbols). Further, the number of slots per subframe may be different depending on the SCS.

Note that, a time direction (t) illustrated in FIG. 3 may be referred to as a time domain, a symbol period, a symbol time, or the like. In addition, a frequency direction may be referred to as a frequency domain, a resource block, a subcarrier, a Bandwidth part (BWP), or the like.

A DMRS is a kind of reference signal, and is prepared for various channels. Here, unless otherwise specified, it may mean a downlink data channel, specifically, a DMRS for PDSCH (Physical Downlink Shared Channel). However, an uplink data channel, specifically, a DMRS for PUSCH (Physical Uplink Shared Channel) may be construed as being similar to a DMRS for PDSCH.

The DMRS may be used for channel estimation at the UE 200 as part of a device, e.g., coherent demodulation. The DMRS may exist only in resource blocks (RBs) used for PDSCH transmission.

The DMRS may have multiple mapping types. Specifically, the DMRS has a mapping type A and a mapping type B. In the mapping type A, the first DMRS is allocated in the second or third symbol of a slot. In the mapping type A, the DMRS may be mapped based on a boundary between slots regardless of where in a slot actual data transmission starts. The reason why the first DMRS is allocated in the second or third symbol of a slot may be construed as for the purpose of allocating the first DMRS after control resource sets (CORESET) .

In the mapping type B, the first DMRS may be allocated in the first symbol of data assignment. In other words, the DMRS may be given relatively to a location where data is allocated, not to the boundary between slots.

Further, the DMRS may have multiple types (Types). Specifically, the DMRS has a Type 1 and a Type 2. The Type 1 and Type 2 are different in mapping and the maximum number of orthogonal reference signals in a frequency domain. The Type 1 can output up to four orthogonal signals in a single-symbol DMRS, and the Type 2 can output up to eight orthogonal signals in a double-symbol DMRS.

### (2) Functional Block Configuration of Radio Communication System

Next, a functional block configuration of the radio communication system 10 will be described.

First, a functional block configuration of the UE 200 will be described.

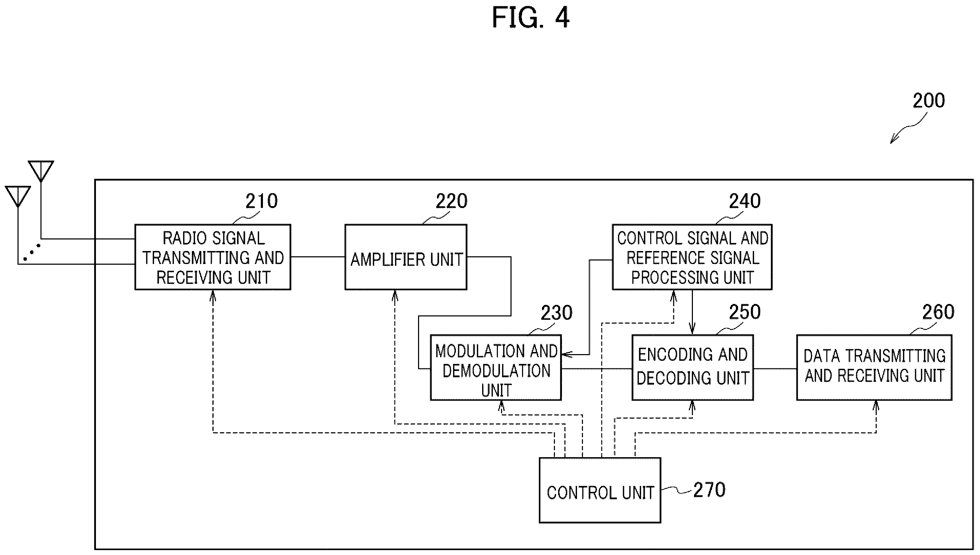

FIG. 4 is a functional block configuration diagram of the UE 200. As illustrated in FIG. 4, the UE 200 includes a radio signal transmitting and receiving unit 210, an amplifier unit 220, a modulation and demodulation unit 230, a control signal and reference signal processing unit 240, an encoding and decoding unit 250, a data transmitting and receiving unit 260, and a control unit 270.

The radio signal transmitting and receiving unit 210 transmits and receives a radio signal according to NR. The radio signal transmitting and receiving unit 210 deals with Massive MIMO, CA in which multiple CCs are bundled and used, DC in which communication is simultaneously performed between the UE and each of two NG-RAN Nodes, and the like.

The amplifier unit 220 includes a PA (Power Amplifier) / LNA (Low Noise Amplifier) and the like. The amplifier unit 220 amplifies a signal output from the modulation and demodulation unit 230 to a predetermined power level. In addition, the amplifier unit 220 amplifies an RF signal output from the radio signal transmitting and receiving unit 210.

The modulation and demodulation unit 230 executes data modulation and demodulation, transmission power setting, resource block assignment, and the like for each predetermined communication destination (gNB 100 or another gNB). In the modulation and demodulation unit 230, Cyclic Prefix-Orthogonal Frequency Division Multiplexing (CP-OFDM)/ Discrete Fourier Transform-Spread (DFT-S-OFDM) may be applied. Further, DFT-S-OFDM may be used not only for uplink (UL) but also for downlink (DL).

The control signal and reference signal processing unit 240 executes processing related to various control signals transmitted and received by the UE 200, and processing related to various reference signals transmitted and received by the UE 200.

Specifically, the control signal and reference signal processing unit 240 receives various control signals transmitted from the gNB 100 via a predetermined control channel, for example, a control signal of a radio resource control layer (RRC). Further, the control signal and reference signal processing unit 240 transmits various control signals to the gNB 100 via a predetermined control channel.

The control signal and reference signal processing unit 240 executes processing using a reference signal (RS) such as a Demodulation Reference Signal (DMRS) and a Phase Tracking Reference Signal (PTRS).

The DMRS is a known terminal-specific reference signal (pilot signal) between the base station and the terminal for estimating a phasing channel used for data demodulation. The PTRS is a terminal-specific reference signal designed for the purpose of estimating phase noise that is a problem in a high frequency band.

Note that, the reference signal may include a Channel State Information-Reference Signal (CSI-RS), a Sounding Reference Signal (SRS), and a Positioning Reference Signal (PRS) for position information, in addition to the DMRS and the PTRS.

In addition, the channel includes a control channel and a data channel. The control channel includes a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

In addition, the data channel includes a PDSCH (Physical Downlink Shared Channel), a PUSCH (Physical Uplink Shared Channel), and the like. Data means data transmitted via the data channel. The data channel may be interchanged with a shared channel.

Here, the control signal and reference signal processing unit 240 may receive downlink control information (DCI). The DCI includes, as existing fields, fields for storing DCI Formats, Carrier indicator (CI), BWP indicator, FDRA (Frequency Domain Resource Assignment), TDRA (Time Domain Resource Assignment), MCS (Modulation and Coding Scheme), HPN (HARQ Process Number), NDI (New Data Indicator), RV (Redundancy Version), and the like.

A value stored in the DCI Format field is an information element specifying the format of the DCI. A value stored in the CI field is an information element specifying a CC for which the DCI is applied. A value stored in the BWP indicator field is an information element specifying a BWP for which the DCI is applied. The BWP that can be specified by the BWP indicator is configured by an information element (BandwidthPart-Config) included in an RRC message. A value stored in the FDRA field is an information element specifying a frequency domain resource for which the DCI is applied. The frequency domain resource is identified by a value stored in the FDRA field and an information element (RA Type) included in the RRC message. A value stored in the TDRA field is an information element specifying a time domain resource for which the DCI is applied. The time domain resource is identified by a value stored in the TDRA field and an information element (pdsch-TimeDomainAllocationList, pusch-TimeDomainAllocationList) included in the RRC message. The time domain resource may be identified by a value stored in the TDRA field and a default table. A value stored in the MCS field is an information element specifying an MCS for which the DCI is applied. The MCS is identified by a value stored in the MCS and an MCS table. The MCS table may be specified by the RRC message, or may be identified by RNTI scrambling. A value stored in the HPN field is an information element specifying a HARQ Process for which the DCI is applied. A value stored in the NDI is an information element for identifying whether data for which the DCI is applied is first transmission data. A value stored in the RV field is an information element specifying redundancy of data for which the DCI is applied.

The encoding and decoding unit 250 performs data division and coupling, channel coding and decoding, and the like for each predetermined communication destination (gNB 100 or another gNB).

Specifically, the encoding and decoding unit 250 divides data output from the data transmitting and receiving unit 260 into predetermined sizes, and performs channel coding on the divided data. Further, the encoding and decoding unit 250 decodes data output from the modulation and demodulation unit 230 and couples the decoded data.

The data transmitting and receiving unit 260 transmits and receives a Protocol Data Unit (PDU) and a Service Data Unit (SDU). Specifically, the data transmitting and receiving unit 260 performs assembly and disassembly of the PDU and SDU in multiple layers (a media access control layer (MAC), a radio link control layer (RLC), a packet data convergence protocol layer (PDCP), and the like). In addition, the data transmitting and receiving unit 260 executes error correction and retransmission control of data on the basis of HARQ (Hybrid Automatic Repeat Request).

The control unit 270 controls each functional block constituting the UE 200. In the embodiment, the control unit 270 may constitute a control unit that performs a specific control to form a terminal group (hereafter, referred to as UE group) by grouping the UEs 200 using the learning model described later. Details of the learning model and specific control will be described later.

Second, the functional block configuration of the gNB 100 will be described.

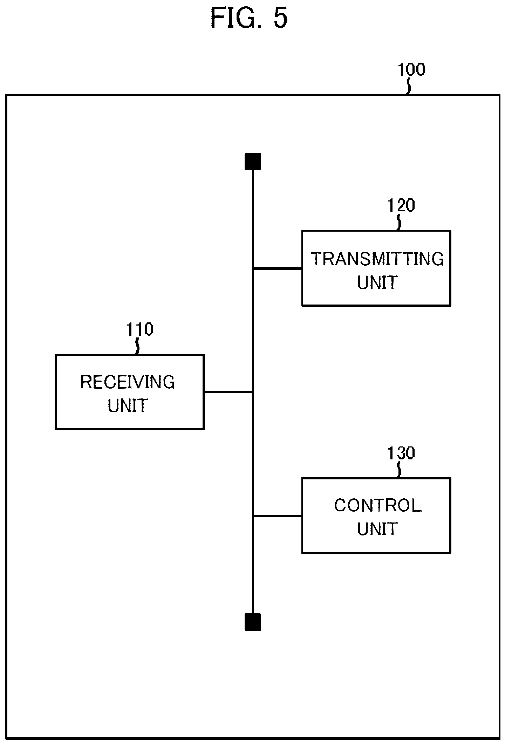

FIG. 5 is a functional block configuration diagram of the gNB 100. As illustrated in FIG. 5, the gNB 100 includes a receiving unit 110, a transmitting unit 120, and a control unit 130.

The receiving unit 110 receives various signals from the UE 200. The receiving unit 110 may receive a UL signal via the PUCCH or the PUSCH.

The transmitting unit 120 transmits various signals to the UE 200. The transmitting unit 120 may transmit a DL signal via the PDCCH or PDSCH.

The control unit 130 controls the gNB 100. In the embodiment, the control unit 130 may constitute a control unit that performs a specific control to form a UE group by grouping the UEs 200 using the learning model described later. Details of the learning model and the specific control will be described later.

### (3) Communication device

Next, a functional block configuration of the communication device 300 will be described. The communication device 300 may be a UE 200 or a gNB 100.

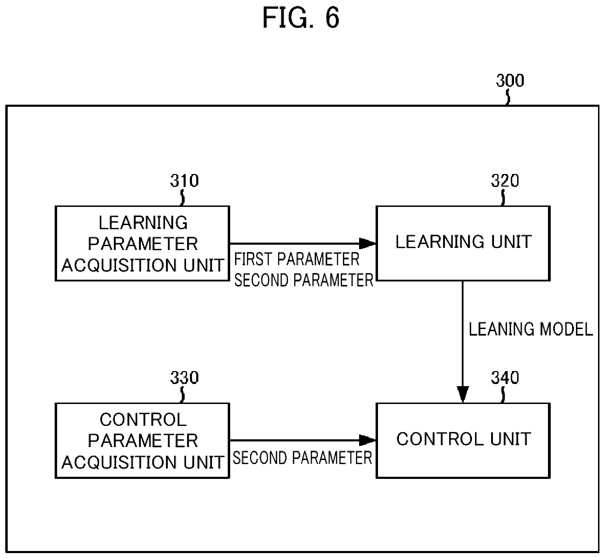

As illustrated in FIG. 6, the communication device 300 includes a learning parameter acquisition unit 310, a learning unit 320, a control parameter acquisition unit 330, and a control unit 340. The learning parameter acquisition unit 310 and the learning unit 320 may be provided in an external device other than the communication device 300. In such a case, the communication device 300 may acquire the learning model generated by the learning unit 320 from the external device.

The learning parameter acquisition unit 310 acquires learning parameters. The learning parameters include a first parameter to be used for communication control between the UE 200 and the gNB 100 and a second parameter affecting the first parameter.

The learning unit 320 generates a learning model by learning the correlation between the first parameter and the second parameter. The learning of the correlation may include machine learning or deep learning represented by artificial intelligence (AI).

The control parameter acquisition unit 330 acquires a control parameter. The control parameter includes the second parameter described above.

The control unit 340 constitutes a control unit for specifying a first parameter based on the second parameter using the learning model. The control unit 340 performs specific control to form a UE group by grouping the UEs 200 based on each specified first parameter.

Under such a premise, the following options can be considered as a learning model and specific control.

### (3.1) Option 1

In Option 1, the first and second parameters may include parameters described below.

The second parameter may include a parameter for a recognition result of an image for a coverage area of the gNB 100. The image may include an image of the UE 200, an image of a user possessing the UE 200, or an image of a barrier such as a building. In such a case, the learning parameter acquisition unit 310 and the control parameter acquisition unit 330 may include an imaging device that captures an image of the coverage area of the gNB 100, and may acquire the second parameter from the imaging device.

The first parameter may include at least one of a position of the UE 200 and a propagation environment between the UE 200 and the gNB 100. The propagation environment may include a distance between the UE 200 and the gNB 100 and may include a line-of-sight status (in line-of-sight (LOS; Line-Of-Sight)/out of line-of-sight (NLOS; Non Line-Of-Sight)) of a communication between the UE 200 and the gNB 100. In such a case, the learning parameter acquisition unit 310 may have a function of acquiring the position of the UE 200. The position of the UE 200 may be acquired from the UE 200 or from a network node such as an MME (Mobility Management Entity) or an AMF (Access and Mobility Function). The learning parameter acquisition unit 310 may have a function of acquiring the position of the gNB 100. The position of the gNB 100 may be known. The learning parameter acquisition unit 310 may have a function of acquiring the line-of-sight status of the communication between the UE 200 and the gNB 100. The line-of-sight status may be specified based on a signal-to-noise ratio (SNR) for the communication (for example, a reference signal such as SRS, PTRS, or CSI-RS) between the UE 200 and the gNB 100.

In Option 1, the specific control may include controls described below.

First, the control unit 340 uses the learning model to specify a first parameter based on the second parameter, and forms a UE group based on each specified first parameter. The UE group may be formed by grouping the UEs 200 located within a predetermined range (UEs 200 located close to each other).

Second, the control unit 340 performs control to assign a specific resource to the UE group. The specific resource may include a resource block defined by frequency and time as the smallest unit. The specific resource may include two or more resource blocks. Although not particularly limited, a resource block may be interchanged with a resource element.

In such a case, the control unit 340 may execute scheduling of the uplink on a UE group basis, or may execute scheduling of the downlink on a UE group basis.

### (3.2) Option 2

In Option 2, the first and second parameters may include parameters described below.

The second parameter may include a parameter for a recognition result of an image for a coverage area of the gNB 100. The image may include an image of the UE 200, an image of a user possessing UE 200, or an image of a barrier such as a building. In such a case, the learning parameter acquisition unit 310 and the control parameter acquisition unit 330 may include an imaging device that captures an image of the coverage area of the gNB 100, and may acquire the second parameter from the imaging device.

The first parameter may include a parameter for at least one of a desired rate of the UE 200, a signal-to-noise ratio of the UE 200, and a propagation path between the UE 200 and the gNB 100. In such a case, the learning parameter acquisition unit 310 may have a function of acquiring the desired rate of the UE 200. The desired rate of the UE 200 may be acquired from the UE 200 or the gNB 100. The learning parameter acquisition unit 310 may have a function of acquiring the signal-to-noise ratio (SNR) of the UE 200. The learning parameter acquisition unit 310 may have a function of acquiring the propagation path between the UE 200 and the gNB 100. The propagation path between the UE 200 and the gNB 100 may be estimated based on the signal-to-noise ratio (SNR) for communication (for example, a reference signal such as SRS, PTRS, or CSI-RS) between the UE 200 and the gNB 100.

In Option 2, the specific control may include controls described below.

First, the control unit 340 uses the learning model to specify a first parameter based on the second parameter, and forms a UE group based on each specified first parameter. The options described below can be considered as a grouping method.

In Option 2A, the control unit 340 may perform control for grouping of the UEs 200 to level desired rates based on the desired rates of the UEs 200. That is, grouping may be a process to classify the UEs 200 with a desired rate higher than a threshold value and the UEs 200 with a desired rate lower than a threshold value into one UE group. With such a configuration, throughput of a whole system can be increased.

In Option 2B, the control unit 340 may perform control for grouping of the UEs 200 to level SNRs based on the SNRs of the UEs 200. That is, grouping may be a process to classify the UEs 200 with SNR higher than a threshold value and the UEs 200 with SNR lower than a threshold value into one UE group. With such a configuration, the UEs 200 which are easy to realize non-orthogonal multiple access can be classified into one UE group.

In Option 2C, the control unit 340 may perform control for grouping of the UEs 200 with propagation path correlation lower than a threshold value based on each propagation path between each of the UEs 200 and the gNB 100. That is, grouping may be a process of classifying the UEs 200 with an angle difference greater than a threshold value with respect to the gNB 100 into one UE group. With such a configuration, the number of streams that can be transmitted in a whole system can be increased.

Although not particularly limited, two or more options selected from Options 2A to 2C may be combined.

Second, the control unit 340 performs control to assign a specific resource to the UE group. The specific resource may include a resource block defined by frequency and time as the smallest unit. The specific resources may include two or more resource blocks. Although not particularly limited, a resource block may be interchanged with a resource element.

In such a case, the control unit 340 may execute scheduling of the UL on a UE group basis, or may execute scheduling of the DL on a UE group basis.

Note that in Option 2, the first parameter may include a parameter for at least one of a recognition result of the image for a coverage area of the gNB 100 and a measurement result of a reference signal when the second parameter is a desired rate of the UE 200 or a propagation path of the UE 200. The reference signal may include SRS, PTRS, or CSI-RS. The measurement result may include a signal-to-noise ratio (SNR).

### (3.3) Option 3

In Option 3, the first and second parameters may include parameters described below.

The second parameter may be a parameter at a particular timing and may include a parameter for at least one of a movement speed of the UE 200, a requested delay of the UE 200, a communication rate of the UE 200, and requested power of the UE 200. In such a case, the learning parameter acquisition unit 310 and the control parameter acquisition unit 330 may have a function of acquiring the movement speed of the UE 200. The movement speed of the UE 200 may be acquired from the UE 200 or from the gNB 100. The learning parameter acquisition unit 310 and the control parameter acquisition unit 330 may have a function of acquiring the requested delay of the UE 200. The requested delay of the UE 200 may be acquired from the UE 200 or from the gNB 100. The learning parameter acquisition unit 310 and the control parameter acquisition unit 330 may have a function of acquiring the communication rate of the UE 200. The communication rate of the UE 200 may be acquired from the UE 200 or from the gNB 100. The learning parameter acquisition unit 310 and the control parameter acquisition unit 330 may have a function of acquiring the requested power of the UE 200. The requested power of the UE 200 may be acquired from the UE 200 or from the gNB 100.

The first parameter may be a parameter at a timing later than the specified timing and may include a parameter for at least one of a movement speed of the UE 200, a requested delay of the UE 200, a communication rate of the UE 200, and requested power of the UE 200. In such a case, the learning parameter acquisition unit 310 may acquire the first parameter as well as the second parameter.

Here, the specified timing may be a timing at which a performance of the specified control is assumed. Therefore, it should be noted that the control parameter acquisition unit 330 cannot acquire the first parameter at a timing (future) later than the specified timing.

In Option 3, the specified control may include controls described below.

First, the control unit 340 uses the learning model to specify a first parameter based on the second parameter, and forms a UE group based on each specified first parameter. The options described below can be considered as a grouping method.

In Option 3A, the control unit 340 may perform control for grouping of the UEs 200 with a movement speed greater than a threshold value based on the movement speed of each of the UEs 200.

In Option 3B, the control unit 340 may perform control for grouping of the UEs 200 with a requested delay smaller than a threshold value based on the requested delay of each of the UEs 200.

In Option 3C, the control unit 340 may perform control for grouping of the UEs 200 with a communication rate smaller than a threshold value based on the communication rate of each of the UEs 200.

In Option 3D, the control unit 340 may perform control for grouping of the UEs 200 with a communication rate greater than a threshold value based on the communication rate of each of the UEs 200.

In Option 3E, the control unit 340 may perform control for grouping of the UEs 200 with requested power smaller than a threshold value based on the requested power of each of the UEs 200.

Although not particularly limited, two or more options selected from Options 3A to 3E may be combined.

Second, the control unit 340 may perform controls described below on a UE group basis.

When Option 3A is applied, the control unit 340 may perform control to apply a specific reference signal period to the UE group (Option 3A-1). The specific reference signal period may be shorter than the reference signal period applied to the UEs 200 with a movement speed smaller than the threshold value. The specific reference signal period may be an SRS signal period or a PTRS signal period. With this configuration, handover can be facilitated.

When Option 3A is applied, the control unit 340 may perform control to apply specific Doppler compensation information to the UE group (Option 3A-2). The specific Doppler compensation information may be PTRS to which the specific reference signal period described above is applied. The specific Doppler compensation information may be position information of the UE 200 acquired at a frequency higher than the frequency of acquiring position information of the UE 200 with a movement speed smaller than the threshold value. The specific Doppler compensation information may be a movement speed of the UE 200 acquired at a frequency higher than the frequency of acquiring a movement speed of the UE 200 with a movement speed smaller than the threshold value. With such a configuration, Doppler compensation can be performed as appropriate.

When Option 3A is applied, the control unit 340 may perform control to apply a specific subcarrier spacing to the UE group (Option 3A-3). The specific subcarrier spacing may be greater than the SCS applied to each of the UEs 200 with a movement speed smaller than the threshold value. Such a configuration reduces the slot length (symbol length) so that communication can be performed adequately.

When option 3A is applied, the control unit 340 may perform control to apply a specific channel state indicator estimation interval (hereafter referred to as a specific CSI estimation interval) to the UE group (Option 3A-4). The specific CSI estimation interval may be an interval shorter than the CSI estimation interval applied to the each of UEs 200 with a movement speed smaller than the threshold value. With this configuration, handover can be facilitated.

Although not particularly limited, two or more options selected from options 3A-1 to 3A-4 may be combined.

When Option 3B is applied, the control unit 340 may perform control to apply a specific frame length to the UE group. The specific frame length may be shorter than the frame length applied to each of the UEs 200 with a requested delay greater than the threshold value. With such a configuration, low delay can be performed as appropriate.

When Option 3C is applied, the control unit 340 may perform control to apply specific error correction to the UE group. The specific error correction may be an error correction that has a less processing load than the error correction applied to each of the UEs 200 with a communication rate greater than the threshold value. For example, the encoding rate of the specific error correction may be smaller than the encoding rate of the error correction applied to the UEs 200 with the communication rate greater than the threshold value. In such a configuration, although the communication rate is reduced due to an increase in redundant bits, the processing delay and processing load associated with retransmission, or the like can be reduced.

When Option 3D is applied, the control unit 340 may perform control to apply specific error correction to the UE group. The specific error correction may be an error correction that has a greater processing load than the error correction applied to each of the UEs 200 with a communication rate smaller than the threshold value. For example, the encoding rate of the specific error correction may be greater than the encoding rate of the error correction applied to each of the UEs 200 with the communication rate smaller than the threshold value. With such a configuration, the communication rate can be improved by reducing redundant bits, although the processing delay and processing load associated with retransmission or the like are increased. That is, the frequency utilization efficiency and the frame efficiency can be improved.

If Option 3E is applied, the control unit 340 may perform control to apply a specific transmission interval to the UE group (Option 3E-1). The specific transmission interval may be longer than the transmission interval applied to each of the UEs 200 with requested power greater than the threshold value. With this configuration, power saving of the UEs 200 can be achieved.

When Option 3E is applied, the control unit 340 may perform control to apply specific arithmetic processing to the UE group (Option 3E-2). The specific arithmetic processing may be an arithmetic processing that has a smaller processing load than the arithmetic processing applied to each of the UEs 200 with requested power greater than the threshold value. The specific arithmetic processing may be an arithmetic processing related to communication. With such a configuration, power saving of the UEs 200 can be achieved.

Although not particularly limited, two or more options selected from the options described above may be combined.

### (3.4) Option 4

In Option 4, the first and second parameters may include parameters described below.

The second parameter may include a parameter for a communication method between the UE 200 and the gNB 100. The communication method may include a method such as Distributed MIMO, Dynamic TDD, Full Duplex, or MU (Multi User)-MIMO (Multiple-Input Multiple-Output). In such a case, the learning parameter acquisition unit 310 and the control parameter acquisition unit 330 may acquire a communication method from the UE 200 or from the gNB 200.

The first parameter may include a parameter for at least one of uplink received power, downlink received power, uplink interference power, and downlink interference power. In such a case, the learning parameter acquisition unit 310 may acquire the uplink received power and the uplink interference power from the gNB 100. The learning parameter acquisition unit 310 may acquire the downlink received power and the downlink interference power from the UE 200.

In Option 4, the specific control may include controls described below.

First, the control unit 340 uses the learning model to specify a first parameter based on the second parameter, and forms a UE group based on each specified first parameter. The following options can be considered as a grouping method.

Here, the first parameter specified using the learning model may include the uplink received power, the uplink interference power, and the uplink SNR at a specific timing. The first parameter specified using the learning model may include the uplink received power, the uplink interference power, and the uplink SNR at a timing later than the specific timing.

Similarly, the first parameter specified using the learning model may include the downlink received power, the downlink interference power, and the downlink SNR at a specific timing. The first parameter specified using the learning model may include the downlink received power the downlink interference power, and the downlink SNR at a timing later than the specific timing.

For example, if the communication method is Distributed MIMO, the positional relationship of antennas is reflected in the learning model, so that a first parameter at a timing (future) later than the specific timing can be specified using the learning model. If the communication method is Dynamic TDD, the use of TDD up to the specific timing is reflected in the learning model, so that a first parameter at a timing (future) later than the specific timing can be specified using the learning model. If the communication method is MU-MIMO, the history of user scheduling up to the specific timing is reflected in the learning model, so that a first parameter at a timing (future) later than the specific timing can be specified using the learning model.

In such a case, if the parameter up to a specific timing is used, the parameter (at least one of uplink received power, downlink received power, uplink interference power, and downlink interference power) up to the specific timing may be considered as an example of the second parameter.

Here, the specific timing may be a timing at which the specific control is assumed to be performed. Therefore, the control unit 340 may form a UE group based on each first parameter of the specific timing, or may form a UE group based on each first parameter of the timing (future) later than the specific timing.

In Option 4A, the control unit 340 may perform control for grouping of the UEs 200 to level the uplink received powers or the uplink interference powers. The control unit 340 may perform control for grouping of the UEs 200 to level the uplink SNRs.

In Option 4B, the control unit 340 may perform control for grouping of the UEs 200 to level the downlink received powers or the downlink interference powers. The control unit 340 may perform control for grouping of the UEs 200 to level the downlink SNRs.

Although not particularly limited, Options 4A and 4B may be combined. In such a case, the UE group for the uplink may be different from the UE group for the downlink.

Second, the control unit 340 may perform the control described below on a UE group basis.

The control unit 340 may apply a specific orthogonal reference signal to the UE group (Option 4-1). The specific orthogonal reference signal is an orthogonal reference signal different from the orthogonal reference signals applied to other UEs 200 (or other UE groups). For example, the orthogonal reference signal may be a DMRS of a PBCH. With this configuration, a unit (for example, a cell) that provides communication services to the UEs 200 included in the UE group can be divided as appropriate.

The control unit 340 may apply a specific frequency resource to the UE group (Option 4-2). The specific frequency resource is a frequency resource different from the frequency resource applied to other UEs 200 (or other UE groups). For example, the frequency resource may be a DMRS of a PBCH. With this configuration, a unit (for example, a cell) that provides communication services to the UEs 200 included in the UE group can be divided as appropriate.

The control unit 340 may apply a specific time resource to the UE group (Option 4-3). The specific time resource is a time resource different from the time resource applied to other UEs 200(or other UE groups). For example, the time resource may be a DMRS of a PBCH. With this configuration, a unit (for example, a cell) that provides communication services to the UEs 200 included in the UE group can be divided as appropriate.

Although not particularly limited, two or more options selected from Option 4-1 to Option 4-3 may be combined.

### (4) Action and Effect

In the embodiment, the communication device 300 specifies a first parameter based on the second parameter using a learning model obtained by learning the correlation between the first parameter and the second parameter. Based on each specified first parameter, the communication device 300 performs specific control to form a UE group by grouping the UEs 200. With such a configuration, appropriate communication control can be performed on a UE group basis by forming a UE group as appropriate.

### (5) Other Embodiments

The contents of the present invention are described above in accordance with the embodiments. However, it is obvious to those skilled in the art that the present invention is not limited to these descriptions but can be modified and improved in various ways.

In the above disclosure, SNR may be interchanged with SINR (Signal-to-Interference-plus-Noise Ratio).

Although not specifically mentioned in the foregoing disclosure, two or more options selected from Options 1 to 4 may be combined.

Although not specifically mentioned in the foregoing disclosure, in Option 4, the communication device 300 may form a first UE group and a second UE group. The first UE group is a UE group to which the same orthogonal reference signal is applied, and may include two or more UE groups. The second UE group is a UE group to which the orthogonal reference signal orthogonal to the orthogonal reference signal applied to the first UE group is applied, and may include two or more UE groups. The second UE group may be a UE group geographically arranged in the neighborhood of the first UE group. In such a case, the communication device 300 may form a UE group so that the uplink or downlink received powers of the UEs 200 included in the second UE group are greater than the uplink or downlink received powers of the UEs 200 included in the first UE group. Alternatively, the communication device 300 may form a UE group so that the uplink or downlink interference powers of the UE 200 included in the second UE group are less than the uplink or downlink interference powers of the UEs 200 included in the first UE group. That is, the UE group may be formed so that the communication rate of the second UE group is greater than the communication rate of the first UE group.

In the foregoing disclosure, configure, activate, update, indicate, enable, specify, and select may be interchanged with each other. Likewise, link, associate, correspond, and map may be interchanged with each other, and allocate, assign, monitor, and map may be interchanged with each other.

Further, specific, dedicated, UE-specific, and UE-dedicated may be interchanged with each other. Likewise, common, shared, group-common, UE-common, and UE-shared may be interchanged with each other.

The block configuration diagram (FIG. 4 and FIG. 5) used in the description of the above-described embodiments illustrates blocks of functional units. Those functional blocks (structural components) can be realized by a desired combination of at least one of hardware and software. A means for realizing each functional block is not particularly limited. That is, each functional block may be realized by one device combined physically or logically. Alternatively, two or more devices separated physically or logically may be directly or indirectly connected (for example, using wired, wireless, or the like) to each other, and each functional block may be realized by these plural devices. The functional blocks may be realized by combining software with the one device or the plural devices described above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that functions to transmit is called a transmitting unit or a transmitter. As described above, the means for realizing is not particularly limited.

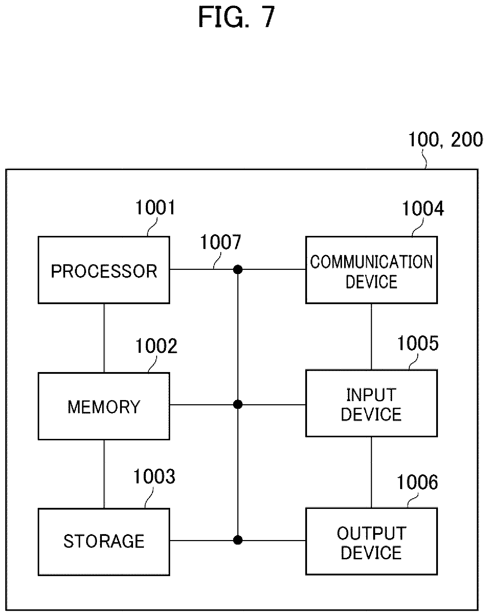

Furthermore, the gNB 100, the UE 200, and the communication device 300 (apparatus) described above may function as computers for processing the radio communication method of the present disclosure. FIG. 7 is a diagram illustrating an example of a hardware configuration of the apparatus. As illustrated in FIG. 7, the apparatus may be configured as a computer device including a processor 1001, a memory 1002, a storage 1003, a communication device 1004, an input device 1005, an output device 1006, a bus 1007, and the like.

Note that, in the following description, the term "device" can be replaced with a circuit, a device, a unit, or the like. A hardware configuration of the apparatus can be constituted by including one or more of each of devices illustrated in the diagram, or can be constituted by without including a part of the devices.

Each functional block of the apparatus (see FIG. 4) is implemented by any of hardware elements of the computer device or a combination of the hardware elements.

Moreover, the processor 1001 performs computing by loading a predetermined software (computer program) on hardware such as the processor 1001 and the memory 1002, and realizes each function in the apparatus by controlling communication via the communication device 1004, and controlling at least one of reading and writing of data on the memory 1002 and the storage 1003.

The processor 1001, for example, operates an operating system to control the entire computer. The processor 1001 may be configured with a central processing unit (CPU), including an interface to a peripheral device, a controller, an arithmetic device, a register, and the like.

Moreover, the processor 1001 reads a computer program (program code), a software module, data, and the like from at least one of the storage 1003 and the communication device 1004 into the memory 1002, and executes various processes according to them. As the computer program, a computer program that causes the computer to execute at least a part of the operation in the above-described embodiments, is used. Alternatively, various processes described above may be executed by one processor 1001 or may be executed simultaneously or sequentially by two or more processors 1001. The processor 1001 may be implemented by using one or more chips. Note that the computer program may be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, a cache, a main memory (main storage device), or the like. The memory 1002 can store a program (program code), a software module, or the like capable of executing a method according to the embodiment of the present disclosure.

The storage 1003 is a computer readable recording medium. For example, the storage 1003 may include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 may be called an auxiliary storage device. The recording medium described above may be, for example, a database including at least one of the memory 1002 and the storage 1003, a server, or other appropriate medium.

The communication device 1004 is hardware (transmission and reception device) capable of performing communication between computers via at least one of a wired network and a wireless network. The communication device 1004 is also called, for example, a network device, a network controller, a network card, a communication module, or the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each of devices such as the processor 1001 and the memory 1002, is connected by a bus 1007 for communicating information. The bus 1007 may be configured using a single bus or a different bus for each device.

Further, the apparatus may be configured to include hardware such as a microprocessor, a digital signal processor (Digital Signal Processor: DSP), Application Specific Integrated Circuit (ASIC), Programmable Logic Device (PLD), Field Programmable Gate Array (FPGA), and the like. Some or all of the functional blocks may be realized by the hardware. For example, the processor 1001 may be implemented by using at least one of these hardware.

The notification of information is not limited to the aspects/embodiments described in the present disclosure, and may be performed using other methods. For example, the notification of information may be performed by physical layer signaling (e.g., Downlink Control Information (DCI), Uplink Control Information (UCI), higher layer signaling (e.g., RRC signaling, Medium Access Control (MAC) signaling, Broadcast Information (Master Information Block (MIB), System Information Block (SIB)), other signals, or combinations thereof. The RRC signaling may also be referred to as an RRC message, e.g., an RRC Connection Setup message, an RRC Connection Reconfiguration message, or the like.

Each of the above aspects/embodiments described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each of the above aspects/embodiments described in the present disclosure may be rearranged as long as there is no conflict. For example, the method described in the present disclosure presents the elements of the various steps using an exemplary sequence, and is not limited to the particular sequence presented.

The specific operation that is performed by the base station in the present disclosure may be performed by its upper node in some cases. In a network constituted by one or more network nodes having the base station, the various operations performed for communication with the terminal may be performed by at least one of the base station and other network nodes other than the base station (for example, MME, S-GW, or the like may be considered, but not limited thereto). Although, in the above, an example in which one other network node other than the base station is used has been described, a combination of a plurality of other network nodes (for example, MME and S-GW) may be used.

Information, and signals (information and the like) can be output from a higher layer (or lower layer) to a lower layer (or higher layer). It may be input and output via a plurality of network nodes.

The input/output information may be stored in a specific location (for example, a memory) or may be managed in a management table. The information to be input/output can be overwritten, updated, or added. The information having been output can be deleted. The information having been input can be transmitted to another device.

The determination may be made by a value (0 or 1) represented by one bit or by Boolean value (Boolean: true or false), or by comparison of numerical values (for example, comparison with a predetermined value).

Each of the above aspects/embodiments described in the present disclosure may be used alone or in combination, or may be switched as it is executed. Further, notification of predetermined information (for example, notification of "being X") is not limited to being performed explicitly, but it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like described above may be represented by using any of a variety of different technologies. For example, data, instruction, command, information, signal, bit, symbol, chip, or the like that may be described throughout the above description, may be represented by voltage, current, electromagnetic wave, magnetic field or magnetic particle, optical field or photons, or a desired combination thereof.

Note that the terms described in this disclosure and the terms necessary for understanding the present disclosure may be replaced by terms having the same or similar meanings. For example, at least one of the channel and the symbol may be a signal (signaling). Also, the signal may be a message. Further, Component Carrier (CC) may be referred to as a carrier frequency, a cell, a frequency carrier, or the like.

The terms "system" and "network" used in the present disclosure can be used interchangeably.

Further, the information, the parameters, and the like described in the present disclosure can be represented by an absolute value, can be expressed as a relative value from a predetermined value, or can be represented by corresponding other information. For example, the radio resource can be indicated by an index.

The names used for the above-described parameters are not restrictive names in any respect. In addition, formulas and the like using these parameters may be different from those explicitly disclosed in the present disclosure. Because the various channels (for example, PUCCH, PDCCH, or the like) and information elements can be identified by any suitable names, the various names assigned to these various channels and information elements shall not be restricted in any way.

In the present disclosure, the terms "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the term such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that perform communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or with some other suitable term.

At least one of the base station and the mobile station may be called a transmitting device, a receiving device, a communication device, or the like. Note that, at least one of the base station and the mobile station may be a device mounted on a moving body, a moving body itself, or the like. The mobile body may be a vehicle (for example, car, plane, etc.), an unmanned mobile body (for example, drone, self-driving car,), or a robot (manned or unmanned). At least one of the base station and the mobile station can be a device that does not necessarily move during the communication operation. For example, at least one of the base station and the mobile station may be an Internet of Things (IoT) device such as a sensor.

The base station in the present disclosure may be read as a mobile station (user terminal, the same applies hereinafter). For example, each aspect/embodiment of the present disclosure may be applied to a configuration in which communication between the base station and the mobile station is replaced by communication between a plurality of mobile stations (for example, it may be called device-to-device (D2D), vehicle-to-everything (V2X), etc.). In this case, the mobile station may have the function of the base station. Further, words such as "up" and "down" may be replaced with words corresponding to communication between terminals (for example, "side"). For example, up channels, down channels, etc. may be replaced with side channels (or side links).

Similarly, the mobile station in the present disclosure may be read as a base station. In this case, the base station may have the function of the mobile station.

A radio frame may be composed of one or more frames in the time domain. Each of one or more frames in the time domain may be referred to as a subframe.

The subframe may be further configured by one or more slots in the time domain. The subframes may be a fixed time length (for example, 1 ms) independent of numerology.

Numerology may be a communication parameter applied to at least one of transmission and reception of a certain signal or channel. The numerology may represent one among, for example, subcarrier spacing (SubCarrier Spacing: SCS), bandwidth, symbol length, cyclic prefix length, transmission time interval (Transmission Time Interval: TTI), number of symbols per TTI, radio frame configuration, specific filtering process performed by a transceiver in the frequency domain, specific windowing process performed by a transceiver in the time domain, and the like.

A slot may be configured with one or a plurality of symbols (Orthogonal Frequency Division Multiplexing (OFDM) symbols, Single Carrier Frequency Division Multiple Access (SC-FDMA) symbols, etc.) in the time domain. The slot may be a unit of time based on the numerology.

The slot may include a plurality of minislots. Each minislot may be configured with one or more symbols in the time domain. The minislot may also be called a subslot. The minislot may be composed of symbols fewer than symbols in one slot. PDSCH (or PUSCH) transmitted in units of time greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframe and the TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, TTI refers to a minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

TTI may be a transmission time unit such as a channel-encoded data packet (transport block), a code block, or a code word, or may be a processing unit such as scheduling or link adaptation. Note that when TTI is given, a time interval (for example, the number of symbols) in which a transport block, a code block, a code word, or the like are actually mapped may be shorter than TTI.

When one slot or one minislot is called TTI, one or more TTIs (that is, one or more slots or one or more minislots) may be a minimum time unit of scheduling. The number of slots (number of minislots) constituting the minimum time unit of scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, or the like. TTI shorter than the ordinary TTI may be referred to as a shortened TTI, a short TTI, a partial TTI (partial or fractional TTI), a shortened subframe, a short subframe, a minislot, a subslot, a slot, or the like.

Note that a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a resource allocation unit in the time domain and the frequency domain, and may include one or a plurality of continuous subcarriers in the frequency domain. The number of subcarriers included in the RB may be the same regardless of the numerology, for example, twelve. The number of subcarriers included in the RB may be determined based on the numerology.

Also, the time domain of the RB may include one or a plurality of symbols, and may have a length of 1 slot, 1 minislot, 1 subframe, or 1 TTI. The 1 TTI, the 1 subframe, or the like may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, or the like.

The resource block may be configured by one or more resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. The PRB may be defined in BWP and numbered within that BWP.

The BWP may include UL BWP (UL BWP) and DL BWP (DL BWP). One or more BWPs may be configured in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, a subframe, a slot, a minislot, and a symbol are merely examples. For example, the number of subframes included in the radio frame, the number of slots per the subframe or the radio frame, the number of minislots included in the slot, the number of symbols and RBs included in the slot or the minislot, the number of subcarriers included in the RB, the number of symbols included in the TTI, a symbol length, a cyclic prefix (CP) length, and the like, can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, and printed electrical connections, and as some non-limiting and non-exhaustive examples, by using electromagnetic energy having wavelengths in a radio frequency region, a microwave region, and a light (both of visible and invisible) region, and the like.

A reference signal may be abbreviated as Reference Signal (RS), and may be called pilot (Pilot) according to applicable standards.

The phrase "based on" used in the present disclosure, does not mean "based only on" unless explicitly stated otherwise. In other words, the phrase "based on" means both "based only on" and "based at least on".

A "means" in a configuration of each device may be replaced with "unit", "circuit", "device", or the like.

Any reference to elements using designations such as "first" and "second" used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive OR.

In the present disclosure, for example, if articles such as a, an, and the in English are added during translation, these articles shall include a plurality of nouns following these articles.

The terms "determining" and "deciding" used in this disclosure may encompass a wide variety of actions. The terms "determining" and "deciding" includes deeming that determining and deciding have been performed by, for example, judging, calculating, computing, processing, deriving, investigating, searching (looking up, search, inquiry) (e.g., searching in a table, database, or other data structure), ascertaining, and the like. Also, the terms "determining" and "deciding" includes deeming that determining and deciding have been performed by, for example, receiving (e.g., receiving information), transmitting (e.g., transmitting information), inputting (input), outputting (output), and accessing (e.g., accessing data in a memory), and the like. Further, the terms "determining" and "deciding" include deeming that determining and deciding have been performed by, for example, resolving, selecting, choosing, establishing, comparing, and the like. In other words, the terms "determining" and "deciding" include deeming that "determining" and "deciding" regarding some actions has been performed. Furthermore, the term "determining (deciding)" may be read as "assuming," "expecting," "considering," and the like.

In the present disclosure, the phrase "A and B are different" may mean "A and B are different from each other". Note that the phrase may mean "A and B are each different from C". Terms such as "leave," "coupled," and the like may also be interpreted in the same manner as "different."

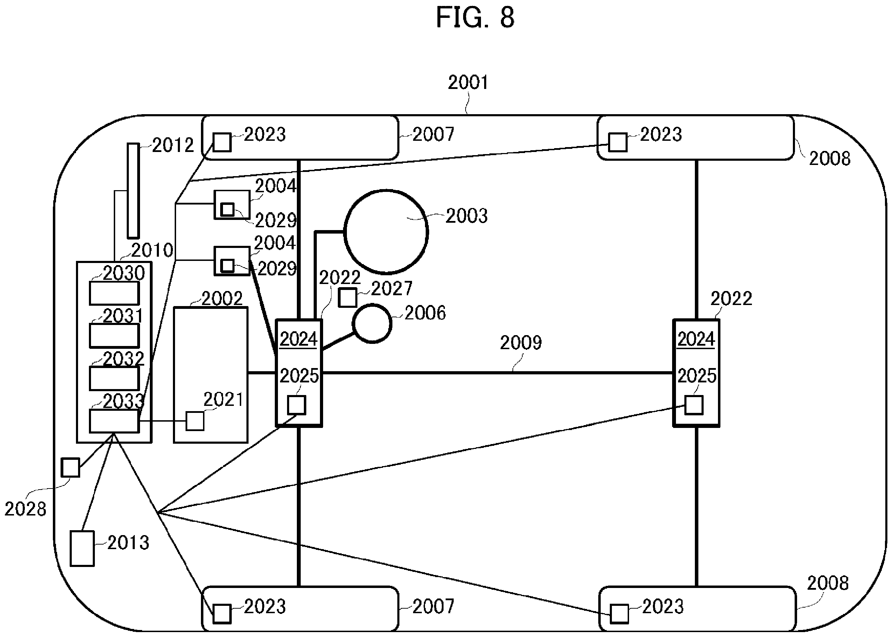

FIG. 8 illustrates a configuration example of a vehicle 2001. As illustrated in FIG. 8, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 includes, for example, an engine, a motor, and a hybrid of an engine and a motor.

The steering unit 2003 includes at least a steering wheel (also referred to as a handle), and is configured to steer at least one of front wheels and rear wheels, based on the operation of the steering wheel operated by a user.

The electronic control unit 2010 includes a microprocessor 2031, a memory (ROM, RAM) 2032, and a communication port (IO port) 2033. The electronic control unit 2010 receives signals from various sensors 2021 to 2027 provided in the vehicle. The electronic control unit 2010 may be called an ECU (electronic control unit).

The signals from the various sensors 2021 to 2028 include a current signal from a current sensor 2021 for sensing the current of a motor, a rotation speed signal of front wheels and rear wheels acquired by a rotation speed sensor 2022, a pressure signal of front wheels and rear wheels acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, an operation signal of a shift lever acquired by a shift lever sensor 2027, and a detection signal, which is acquired by an object detection sensor 2028, for detecting obstacles, vehicles, pedestrians, and the like.

The information service unit 2012 includes: various devices such as a car navigation system, an audio system, a speaker, a television, and a radio for providing various information such as driving information, traffic information, and entertainment information; and one or more ECUs for controlling these devices. The information service unit 2012 provides various multimedia information and multimedia services to the occupants of the vehicle 1 by using information acquired from an external device via a communication module 2013 or the like.

A driving support system unit 2030 includes various devices for providing functions to prevent accidents or reduce the driver's driving load, such as a millimeter wave radar, light detection and ranging (LiDAR), a camera, a positioning locator (for example, GNSS), map information (for example, high-definition (HD) maps, autonomous vehicle (AV) maps, or the like), a gyroscopic system (for example, Inertial Measurement Unit (IMU), Inertial Navigation System (INS), or the like), an artificial intelligence (AI) chip, an AI processor, or the like; and one or more ECUs for controlling these devices. In addition, the driving support system unit 2030 transmits and receives various kinds of information via the communication module 2013 to realize a driving support function or an automatic driving function.

The communication module 2013 can communicate with the microprocessor 2031 and elements of the vehicle 1 via the communication port. For example, the communication module 2013 transmits and receives data via the communication port 2033 to and from the drive unit 2002, the steering unit 2003, the accelerator pedal 2004, the brake pedal 2005, the shift lever 2006, the right and left front wheels 2007, the right and left rear wheels 2008, the axle 2009, the microprocessor 2031 and the memory (ROM, RAM) 2032 in the electronic control unit 2010, and the sensors 2021 to 2028 all of which are provided in the vehicle 2001.

The communication module 2013 is a communication device that can be controlled by the microprocessor 2031 of the electronic control unit 2010, and can communicate with an external device. For example, the communication module 2013 transmits and receives various kinds of information with the external device by means of radio communication. The communication module 2013 may be provided inside or outside the electronic control unit 2010. The external device may be, for example, a base station, a mobile station, or the like.

The communication module 2013 transmits a current signal from a current sensor, which is input to the electronic control unit 2010, to an external device by means of radio communication. In addition, the communication module 2013 transmits to an external device by means of radio communication, a rotation speed signal of the front and rear wheels acquired by the rotation speed sensor 2022, an air pressure signal of the front and rear wheels acquired by the air pressure sensor 2023, a vehicle speed signal acquired by the vehicle speed sensor 2024, an acceleration signal acquired by the acceleration sensor 2025, an accelerator pedal depression amount signal acquired by the accelerator pedal sensor 2029, a brake pedal depression amount signal acquired by the brake pedal sensor 2026, a shift lever operation signal acquired by the shift lever sensor 2027, and a detection signal, which is acquired by the object detection sensor 2028, for detecting obstacles, vehicles, pedestrians, and the like. These signals are input to the electronic control unit 2010.

The communication module 2013 receives various pieces of information (traffic information, signal information, inter-vehicle information, and the like) transmitted from an external device, and displays them on the information service unit 2012 provided in the vehicle. The communication module 2013 also stores various pieces of information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like all of which are provided in the vehicle 2001.

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

- 10: radio communication system
- 20: NG-RAN
- 100: gNB
- 110: receiving unit
- 120: transmitting unit
- 130: control unit
- 200: UE
- 210: radio signal transmitting and receiving unit
- 220: amplifier unit
- 230: modulation and demodulation unit
- 240: control signal and reference signal processing unit
- 250: encoding and decoding unit
- 260: data transmitting and receiving unit
- 270: control unit
- 300: communication device
- 310: learning parameter acquisition unit
- 320: learning unit
- 330: control parameter acquisition unit
- 340: control unit
- 1001: processor
- 1002: memory
- 1003: storage
- 1004: communication device
- 1005: input device
- 1006: output device
- 1007: bus
- 2001: vehicle
- 2002: drive unit
- 2003: steering unit
- 2004: accelerator pedal
- 2005: brake pedal
- 2006: shift lever
- 2007: left and right front wheels
- 2008: left and right rear wheels
- 2009: axle
- 2010: electronic control unit
- 2012: information service unit
- 2013: communication module
- 2021: current sensor
- 2022: rotation speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A communication device comprising:
a control unit that uses a learning model learning a correlation between a first parameter, which is used for communication control between each of terminals and a base station, and a second parameter affecting the first parameter, to specify the first parameter based on the second parameter,
wherein the control unit performs specific control to form a terminal group by grouping of the terminals based on each specified first parameter.

2. The communication device according to claim 1,
wherein the second parameter includes a parameter for a recognition result of an image for a coverage area of the base station, and
wherein the first parameter includes a parameter for at least one of a position of each of the terminals and a propagation environment between each of the terminals and the base station.

3. The communication device according to claim 2, wherein the specific control includes control to assign a specific resource to the terminal group.

4. The communication device according to claim 1,
wherein the second parameter includes a parameter for at least one of a recognition result of an image for a coverage area of the base station and a measurement result of a reference signal, and
wherein the first parameter includes a parameter for at least one of a desired rate of each of the terminals, a signal-to-noise ratio of each of the terminals, and a propagation path between each of the terminals and the base station.

5. The communication device according to claim 4, wherein the specific control includes at least one of control for grouping of the terminals to level desired rates based on the desired rates of the terminals, control for grouping of the terminals to level signal-to-noise ratios based on the signal-to-noise ratios of the terminals, and control for grouping of the terminals with propagation path correlation smaller than a threshold value based on the propagation path between each of the terminals and the base station.

6. The communication device according to claim 4 or 5, wherein the specific control includes control to assign a specific resource to the terminal group.

7. The communication device according to claim 1,
wherein the second parameter is a parameter at a specific timing, and includes a parameter for at least one of a movement speed of each of the terminals, a requested delay of each of the terminals, a communication rate of each of the terminals, and requested power of each of the terminals, and
wherein the first parameter is a parameter at a timing later than the specific timing, and includes a parameter for at least one of a movement speed of each of the terminals, a requested delay of each of the terminals, a communication rate of each of the terminals, and requested power of each of the terminals.

8. The communication device according to claim 7, wherein the specific control includes at least one of control for grouping of the terminals with a movement speed greater than a threshold value based on the movement speed of each of the terminals, control for grouping of the terminals with a requested delay smaller than a threshold value based on the requested delay of each of the terminals, control for grouping of the terminals with a communication rate smaller than a threshold value based on the communication rate of each of the terminals, control for grouping of the terminals with a communication rate greater than a threshold value based on the communication rate of each of the terminals, and control for grouping of the terminals with requested power smaller than a threshold value based on the requested power of each of the terminals.

9. The communication device according to claim 7 or 8, wherein the specific control includes at least one of control to apply a specific reference signal period to the terminal group, control to apply specific Doppler compensation information to the terminal group, control to apply a specific subcarrier spacing to the terminal group, control to apply a specific channel state indicator estimation interval to the terminal group, control to apply a specific frame length to the terminal group, control to apply specific error correction to the terminal group, control to apply a specific transmission interval to the terminal group, and control to apply specific arithmetic processing to the terminal group.

10. The communication device according to claim 1,
wherein the second parameter includes a parameter for a communication method between each of the terminals and the base station, and
wherein the first parameter includes a parameter for at least one of uplink received power, downlink received power, uplink interference power, and downlink interference power.

11. The communication device according to claim 10, wherein the specific control includes control to apply at least one of a specific orthogonal reference signal, a specific frequency resource, and a specific time resource to the terminal group.

12. A radio communication method comprising:
using a learning model learning a correlation between a first parameter, which is used for communication control between each of terminals and a base station, and a second parameter affecting the first parameter, to specify the first parameter based on the second parameter; and
performing specific control to form a terminal group by grouping of the terminals based on each specified first parameter.
